# EUROPEAN PATENT APPLICATION

(11) **EP 4 207 499 A1**
(43) Date of publication of application: **05.07.2023**
(21) Application number: 22216955.9
(22) Date of filing: 28.12.2022
(51) Int. Cl.: H01R 12/71, H01R 27/02, H01R 12/58, H01R 12/70

(54) **HYBRID CONNECTOR**

(30) Priority: 31.12.2021 CN 202111665110
(71) Applicant: Tyco Electronics Technology (SIP) Ltd., 215026 Suzhou (CN); Tyco Electronics (Shanghai) Co., Ltd., Pilot Free Trade Zone Shanghai 200131 (CN)
(72) Inventor: Huang, Jianlin, Suzhou, 215026 (CN); Pan, Feng, Suzhou, 215026 (CN); Zhang, Yuanming, Shanghai, 200233 (CN)
(74) Representative: Grünecker Patent- und Rechtsanwälte PartG mbB

(57) **Abstract**

The present invention discloses a hybrid connector. The hybrid connector comprises of: a housing (10) which has a first side and a second side opposite to the first side in a transverse direction (X) of the housing (10); and a plurality of terminals (P, D, S) which are arranged in the housing (10) and extend along a longitudinal direction of the housing (10) for transmitting electric energy and signals respectively. The plurality of terminals (P, D, S) comprise: a power supply terminal (P) arranged in a middle area between the first side and the second side; a first signal terminal (D) arranged between the power terminal (P) and the first side of the housing (10); and a second signal terminal (S) arranged between the power terminal (P) and the second side of the housing (10). In the present invention, the power terminal is arranged in the middle area of the housing, and the first signal terminal and the second signal terminal are respectively arranged on both sides of the power terminal. The advantage of this layout is that it is convenient to expand the signal terminals towards both sides of the housing.

## Description

### CROSS-REFERENCE TO RELATED APPLICATION

This application claims the benefit of Chinese Patent Application No. CN202111665110.6 filed on December 31, 2021 in the State Intellectual Property Office of China, the whole disclosure of which is incorporated herein by reference.

### BACKGROUND OF THE INVENTION

### Field of the Invention

The present invention relates to a hybrid connector, in particular to a connector for laser radar.

### Description of the Related Art

In the prior art, the connector for a laser radar usually comprises a housing and power terminals for power supply arranged in the housing, Ethernet signal terminals for transmitting Ethernet signals, and ordinary signal terminals for transmitting common signals (E. G, LAN signals).

In the prior art, the power terminals are usually arranged in the area close to the transverse side of the housing, such as the left or right side of the housing, and the Ethernet signal terminals or ordinary signal terminals are usually arranged in the transverse middle area of the housing, which makes it impossible to expand the signal terminals towards the left or right side of the housing, because the middle area of the housing has no space for expanding the signal terminals.

In addition, in the prior art, the power terminal and the signal terminal are exactly the same, which leads to the lateral size of the signal terminal is too large and increases the dimension of the entire connector.

### SUMMARY OF THE INVENTION

The present invention has been made to overcome or alleviate at least one aspect of the above mentioned disadvantages.

According to an aspect of the present invention, there is provided a hybrid connector. The hybrid connector comprises of: a housing which has a first side and a second side opposite to the first side in a transverse direction of the housing; and a plurality of terminals which are arranged in the housing and extend along a longitudinal direction of the housing for transmitting electric energy and signals respectively. The plurality of terminals comprise: a power supply terminal arranged in a middle area between the first side and the second side; a first signal terminal arranged between the power terminal and the first side of the housing; and a second signal terminal arranged between the power terminal and the second side of the housing.

According to an exemplary embodiment of the present invention, the signal transmission rate of the first signal terminal is higher than that of the second signal terminal.

According to another exemplary embodiment of the present invention, the power terminal comprises a pair of power terminals which are arranged in a column along a height direction of the housing.

According to another exemplary embodiment of the present invention, the first signal terminal comprises a plurality of pairs of first signal terminals, and each pair of first signal terminals are arranged in a row along the transverse direction of the housing; and two adjacent pairs of first signal terminals are aligned in the height direction of the housing and separated by a predetermined distance in the height direction of the housing.

According to another exemplary embodiment of the present invention, the first signal terminal comprises a plurality of pairs of first signal terminals, and each pair of first signal terminals is arranged in a column along the height direction of the housing; and two adjacent pairs of first signal terminals are aligned in the transverse direction of the housing and separated by a predetermined distance in the transverse direction of the housing.

According to another exemplary embodiment of the present invention, the second signal terminal comprises a plurality of second signal terminals which are aligned along the transverse direction or height direction of the housing.

According to another exemplary embodiment of the present invention, the second signal terminal comprises a plurality of second signal terminals which are arranged in multiple rows and columns along the transverse direction and height direction of the housing.

According to another exemplary embodiment of the present invention, the second signal terminals comprise a plurality of pairs of second signal terminals, and each pair of second signal terminals is arranged in a row along the transverse direction of the housing or in a column along the height direction of the housing; and two adjacent pairs of second signal terminals are aligned and separated in the transverse direction or the height direction of the housing.

According to another exemplary embodiment of the present invention, the power supply terminal is different from the first signal terminal and the second signal terminal; and the cross-sectional area of the power supply terminal is greater than that of the first signal terminal and the second signal terminal.

According to another exemplary embodiment of the present invention, the first signal terminal and the second signal terminal are identical, so that the first signal terminal and the second signal terminal is capable of being used interchangeably.

According to another exemplary embodiment of the present invention, the first signal terminal comprises at least one pair of Ethernet signal terminals for transmitting Ethernet signals.

According to another exemplary embodiment of the present invention, the second signal terminal comprises at least one pair of LAN signal terminals for transmitting LAN signals.

According to another exemplary embodiment of the present invention, the hybrid connector further comprises an electromagnetic shield arranged in the housing, the electromagnetic shield at least comprises a first side wall located between the power terminal and the first signal terminal to isolate the first signal terminal from the power terminal.

According to another exemplary embodiment of the present invention, the first side wall and the power terminal are adjacent to each other on the transverse direction of the housing.

According to another exemplary embodiment of the present invention, the electromagnetic shield also comprises of: a second side wall opposite to the first side wall; and a third side wall which is connected between the first side wall and the second side wall. The first side wall, the second side wall and the third side wall of the electromagnetic shield form an accommodation space opened at one side, and the first signal terminal is accommodated in the accommodation space.

According to another exemplary embodiment of the present invention, the electromagnetic shield comprises a closed peripheral wall, and the first signal terminal is contained in the electromagnetic shield, so that the first signal terminal is isolated from the power terminal.

According to another exemplary embodiment of the present invention, the electromagnetic shield has a connection pin extending longitudinally to the outside of the housing for electrical connection to a circuit board.

According to another exemplary embodiment of the present invention, the housing comprises of: an installation part for fixedly installing the connector; and a body part fixedly connected to one side of the installation part. The outer surface of the peripheral wall of body part extends continuously along a circumferential direction to form an integral mating surface for mating with a mating housing of a mating connector.

According to another exemplary embodiment of the present invention, a terminal cavity is formed in the body part to accommodate the terminals. The terminal comprises a mating end extending into the terminal cavity for mating with a mating terminal of the mating connector and a connection end extending from the other side of the installation part for connecting to the circuit board.

In the foregoing exemplary embodiments according to the present invention, the power terminals are arranged in the middle area of the housing, and the first signal terminals and the second signal terminals are respectively arranged on both sides of the power terminals. The advantage of this layout is that it is convenient to expand the signal terminals towards both sides of the housing.

### BRIEF DESCRIPTION OF THE DRAWINGS

The above and other features of the present invention will become more apparent by describing in detail exemplary embodiments thereof with reference to the accompanying drawings, in which:
Fig. 1 shows an illustrative perspective view of a hybrid connector according to an exemplary embodiment of the present invention;
Fig. 2 shows an illustrative perspective view of a hybrid connector according to an exemplary embodiment of the present invention when viewed from its front side;
Fig. 3 shows an illustrative perspective view of a hybrid connector according to an exemplary embodiment of the present invention when viewed from its rear side;
Fig. 4 shows a plan view of a hybrid connector according to an exemplary embodiment of the present invention when viewed from its front side;
Fig. 5 shows a spatial layout of terminals and electromagnetic shield of a hybrid connector according to an exemplary embodiment of the present invention; and
Fig. 6 shows a plan view of a hybrid connector according to another exemplary embodiment of the present invention when viewed from its front side.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a hybrid connector. The hybrid connector comprises of: a housing which has a first side and a second side opposite to the first side in a transverse direction of the housing; and a plurality of terminals which are arranged in the housing and extend along a longitudinal direction of the housing for transmitting electric energy and signals respectively. The plurality of terminals comprise: a power supply terminal arranged in a middle area between the first side and the second side; a first signal terminal arranged between the power terminal and the first side of the housing; and a second signal terminal arranged between the power terminal and the second side of the housing.

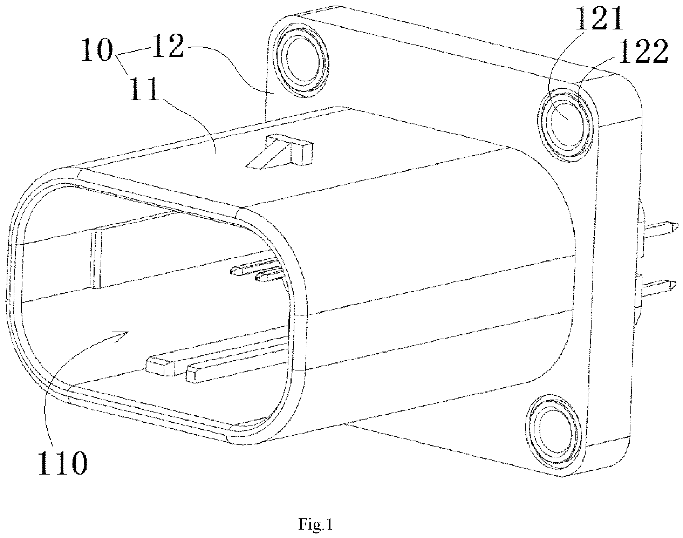

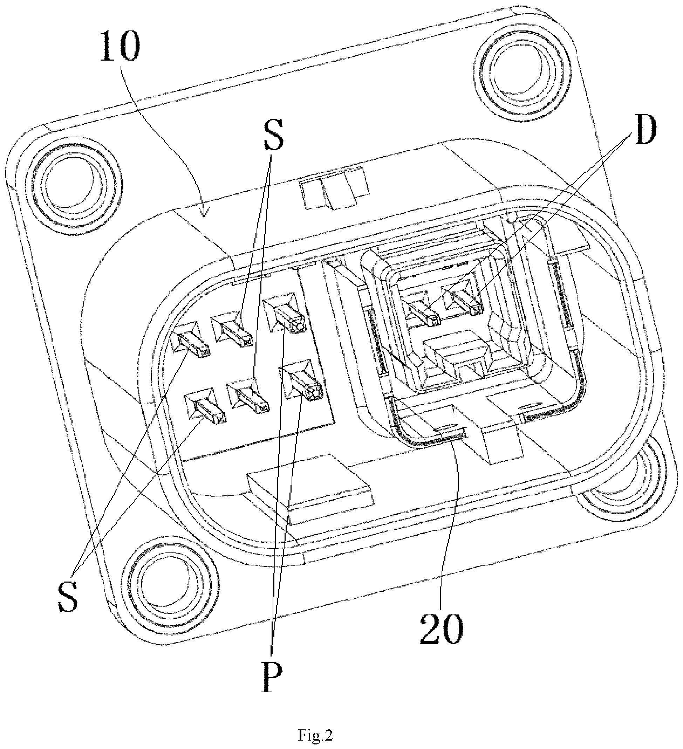

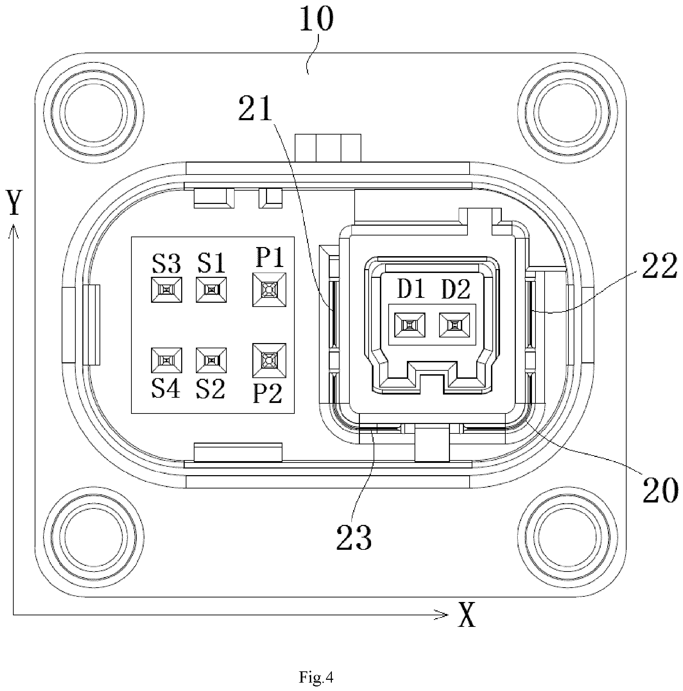

Fig. 1 shows an illustrative perspective view of a hybrid connector according to an exemplary embodiment of the present invention; Fig. 2 shows an illustrative perspective view of a hybrid connector according to an exemplary embodiment of the present invention when viewed from its front side; Fig. 4 shows a plan view of a hybrid connector according to an exemplary embodiment of the present invention when viewed from its front side.

As shown in figures 1-2 and 4, in the illustrated embodiment, a hybrid connector suitable for connecting with, for example, a laser radar is disclosed, which can transmit power and signals at the same time. The hybrid connector mainly comprises: a housing 10 and multiple pairs of terminals P, D, S. The housing 10 has a first side (E. G, the right side in the figure) and a second side (E. G, the left side in the figure) opposite to the first side in a transverse direction X of the housing 10. A plurality of pairs of terminals P, D, S are arranged in the housing 10 and extend along a longitudinal direction of the housing 10.

As shown in Figure 1-2 and Figure 4, in the illustrated embodiment, multiple pairs of terminals P, D, S comprise at least one pair of first signal terminals D, at least one pair of second signal terminals S, and a pair of power supply terminals P. At least one pair of first signal terminals D is arranged in a first area near the first side of the housing 10, for example, in the right area in the figure. At least one pair of second signal terminals S is arranged in a second area close to the second side of the housing 10, for example, in the left area in the figure. A pair of power terminals P are arranged in the middle area between the first area and the second area.

As shown in figures 1-2 and 4, in the illustrated embodiment, the power terminal P is arranged in the middle area of the housing, and the first signal terminal D and the second signal terminal S are respectively arranged on both sides of the power terminal P. The advantage of this layout is that it is convenient to expand the signal terminal towards the left or right side of the housing, because the space on the left or right side of the housing can be easily increased.

As shown in figures 1-2 and 4, in the illustrated embodiment, the signal transmission rate of the first signal terminal D is higher than that of the second signal terminal S. For example, the first signal terminal D is a high-speed signal terminal, and the second signal terminal S is a low-speed signal terminal.

As shown in figures 1-2 and 4, in the illustrated embodiment, the first signal terminal D and the second signal terminal S are differential signal terminals configured in pairs. As shown in Figure 4, at least one pair of first signal terminals D comprises Ethernet signal terminals D1 and D2 for transmitting Ethernet signals, and the Ethernet signal terminals D1 and D2 are high-speed differential signal terminals. At least one pair of second signal terminals S comprises LAN signal terminals S 1 and S2 and LAN signal terminals S3 and S4 for transmitting LAN signals (E. G, CAN signals). However, the present invention is not limited to the illustrated embodiment. For example, the number of first signal terminals D and second signal terminals S can be changed according to actual needs. For example, the hybrid connector can comprise multiple pairs of first signal terminals D and multiple pairs of second signal terminals S, or multiple pairs of first signal terminals D and one pair of second signal terminals S.

As shown in figures 1-2 and 4, in the illustrated embodiment, a pair of power terminals P are arranged in a column along the height direction Y of the housing 10. Each pair of first signal terminals D is arranged in a row along the transverse direction X of the housing 10. When the hybrid connector comprises a plurality of pairs of first signal terminals D, the two adjacent pairs of first signal terminals D are aligned in the height direction Y of the housing 10 and separated by a predetermined distance in the height direction Y of the housing 10.

As shown in figures 1-2 and 4, in the illustrated embodiment, each pair of second signal terminals S is arranged in a column along the height direction Y of the housing 10. When the hybrid connector comprises multiple pairs of second signal terminals S, the two adjacent pairs of second signal terminals S are aligned in the transverse direction X of the housing 10 and separated by a certain distance in the transverse direction X of the housing 10.

Referring to figures 1-2 and 4, in an exemplary embodiment of the present invention, the hybrid connector comprises a plurality of second signal terminals S, which are aligned along the transverse direction X or height direction Y of the housing 10.

As shown in figures 1-2 and 4, in the illustrated embodiment, the hybrid connector comprises a plurality of second signal terminals S, which are arranged in multiple rows and columns along the transverse direction X and height Y directions of the housing 10. The two adjacent columns of second signal terminals S are aligned in the transverse direction X of the housing 10 and separated by a certain distance in the transverse direction X of the housing 10. The two adjacent rows of second signal terminals S are aligned in the height direction Y of the housing 10 and separated by a certain distance in the height direction Y of the housing 10.

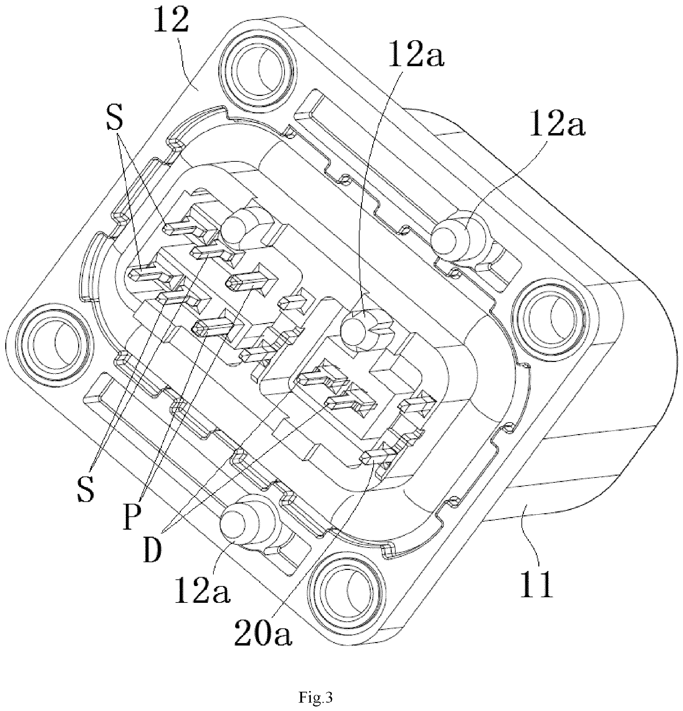

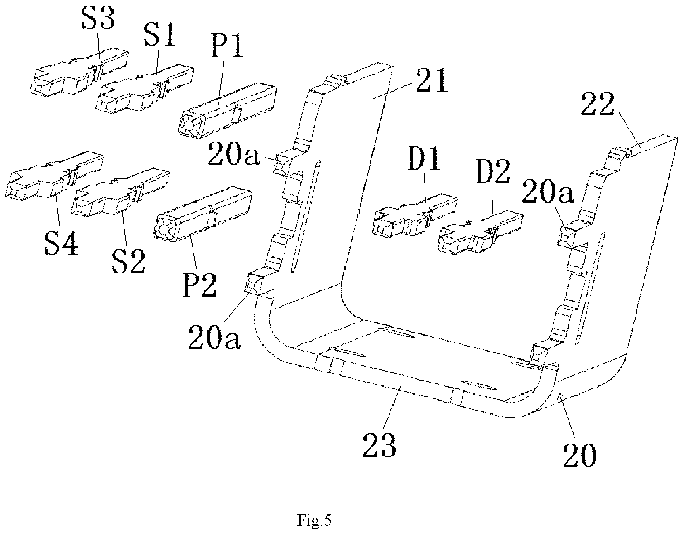

Fig. 3 shows an illustrative perspective view of a hybrid connector according to an exemplary embodiment of the present invention when viewed from its rear side; Fig. 5 shows the spatial arrangement of terminals D, S, P and electromagnetic shield 20 of a hybrid connector according to an exemplary embodiment of the present invention.

As shown in Figures 1 to 5, in the illustrated embodiment, the power terminal P is different from the first signal terminal D and the second signal terminal S. The cross-sectional area of the power terminal P is larger than that of the first signal terminal D and the second signal terminal S. That is, the cross-sectional area of the first signal terminal D and the second signal terminal S is smaller than that of the power terminal P. for example, the cross-sectional area of the first signal terminal D and the second signal terminal S can be equal to half of the cross-sectional area of the power terminal P, so that the volume of the first signal terminal D and the second signal terminal S can be reduced by half, thereby reducing the size of the entire hybrid connector.

As shown in Figures 1 to 5, in the illustrated embodiment, the first signal terminal D and the second signal terminal S are exactly the same, so that the first signal terminal D and the second signal terminal S can be used interchangeably. In this way, the manufacturing is more convenient and the manufacturing cost can be reduced.

As shown in Figures 1 to 5, in the illustrated embodiment, the current passing through the power terminal P and the first signal terminal D is large, and strong signal interference is easy to occur between them. In order to reduce the interference between the power terminal P and the first signal terminal D. As shown in Figures 1 to 5, in the illustrated embodiment, the hybrid connector also comprises an electromagnetic shield 20. The electromagnetic shield 20 is arranged in the housing 10. The electromagnetic shield 20 comprises at least a first side wall 21 located between the power terminal P and the first signal terminal D for isolate the first signal terminal D from the power terminal P. In the illustrated embodiment, the first side wall 21 and the power supply terminal P are arranged adjacent to each other in the transverse direction X of the housing 10. In this way, the signal interference between the power terminal P and the first signal terminal D can be reduced and the reliability of signal transmission can be improved.

As shown in Figures 1 to 5, in the illustrated embodiment, the electromagnetic shield 20 also comprises a second side wall 22 and a third side wall 23. The second side wall 22 is opposite to the first side wall 21. The third side wall 23 is connected between the first side wall 21 and the second side wall 22. The first side wall 21, the second side wall 22 and the third side wall 23 of the electromagnetic shield 20 form an accommodation space opened at one side. Therefore, in the illustrated embodiment, the cross-sectional shape of the electromagnetic shield 20 is U-shaped, and the first signal terminal D is accommodated in the accommodation space of the U-shaped electromagnetic shield 20.

However, the present invention is not limited to the illustrated embodiment. For example, in another exemplary embodiment of the present invention, the electromagnetic shield 20 may comprise a closed peripheral wall, and the first signal terminal D is accommodated in the accommodation space surrounded by the closed peripheral wall of the electromagnetic shield 20, so that the first signal terminal D is isolated from the power terminal P.

As shown in Figures 1 to 5, in the illustrated embodiment, the housing 10 is an integral part, and the housing 10 comprises a body part 11 and an installation part 12. The body part 11 is connected to one side of the installation part 12. In the illustrated embodiment, the body part 11 is in a cylindrical shape, and the outer surface at its end extends continuously along the circumferential direction to form an integral mating surface suitable for mating with a mating housing of a mating connector (not shown). A terminal cavity 110 is formed in the body part 11 to accommodate the terminals P, D, and S. The terminal P, D, S of the hybrid connector comprises a mating end extending into the terminal cavity 110 of the body part 11 to mate with a mating terminal of the mating connector and a connection end protruding from the other side of the installation part 12 to connect a circuit board (not shown). In the illustrated embodiment, the electromagnetic shield 20 has a connection pin 20a extending out of the housing 10 for connection to the circuit board.

As shown in Figures 1 to 5, in the illustrated embodiment, the hybrid connector is a circuit board end hybrid connector for connecting to a circuit board. A connecting hole 121 is formed in each of the four corners of the installation part 12, and a metal bushing 122 is embedded in each connecting hole 121. Threaded connecting member (not shown), for example, bolt or screw can pass through the metal bushing 122 and connect to the circuit board, so that the housing 10 of the hybrid connector can be fixed to the circuit board. In addition, on the other side of the installation part 12, a plurality of positioning posts 12a suitable for being respectively assembled into a plurality of positioning holes on the circuit board are also formed. In the illustrated embodiment, the cross-sectional shapes of the plurality of positioning columns 12a may be the same or different.

Please note that the connector of the present invention is not limited to the circuit board end connector for connecting to the circuit board, for example, the connector of the present invention can also be a cable end connector for connecting to a cable. The circuit board end connector and the cable end connector are suitable for mutual matching.

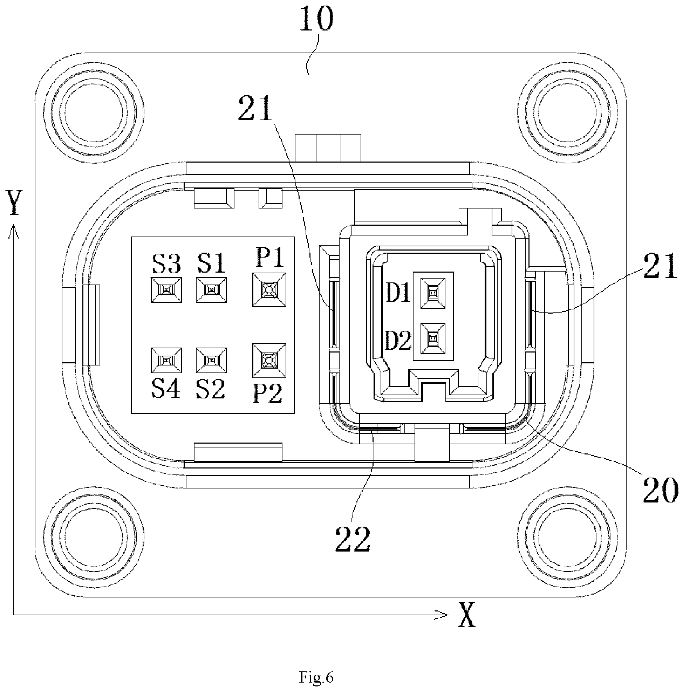

Fig. 6 shows a plan view of a connector according to another exemplary embodiment of the present invention when viewed from its front side.

Compared with the connector shown in Figure 1-5, the main difference of the connector shown in Figure 6 is only the arrangement of the first signal terminals D.

As shown in Fig. 6, in the illustrated embodiment, each pair of first signal terminals D is arranged in a column along the height direction Y of the housing 10. In an exemplary embodiment of the present invention, if the connector comprises a plurality of pairs of first signal terminals D, two adjacent pairs of first signal terminals D are aligned in the transverse direction X of the housing 10 and separated by a predetermined distance in the transverse direction X of the housing 10.

In addition, please note that the arrangement of the second signal terminals S in the present invention is not limited to the embodiment shown in figures 1-6. For example, in another exemplary embodiment of the present invention, each pair of second signal terminals S can be arranged in a row along the transverse direction X of the housing 10, and the adjacent two pairs of second signal terminals S are aligned in the height direction Y of the housing 10 and separated by a certain distance in the height direction Y of the housing 10.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A hybrid connector, **characterized by** comprising:
a housing (10) which has a first side and a second side opposite to the first side in a transverse direction (X) of the housing (10); and
a plurality of terminals (P, D, S) which are arranged in the housing (10) and extend along a longitudinal direction of the housing (10) for transmitting electric energy and signals respectively,
wherein the plurality of terminals (P, D, S) comprise:
a power supply terminal (P) arranged in a middle area between the first side and the second side;
a first signal terminal (D) arranged between the power terminal (P) and the first side of the housing (10); and
a second signal terminal (S) arranged between the power terminal (P) and the second side of the housing (10).

2. The hybrid connector according to claim 1, **characterized in that**
the signal transmission rate of the first signal terminal (D) is higher than that of the second signal terminal (S).

3. The hybrid connector according to claim 1, **characterized in that**
the power terminal (P) comprises a pair of power terminals (P) which are arranged in a column along a height direction (Y) of the housing (10).

4. The hybrid connector according to claim 1, **characterized in that**
the first signal terminal (D) comprises a plurality of pairs of first signal terminals (D), and each pair of first signal terminals (D) are arranged in a row along the transverse direction (X) of the housing (10); and
two adjacent pairs of first signal terminals (D) are aligned in the height direction (Y) of the housing (10) and separated by a predetermined distance in the height direction (Y) of the housing (10).

5. The hybrid connector according to claim 1, **characterized in that**
the first signal terminal (D) comprises a plurality of pairs of first signal terminals (D), and each pair of first signal terminals (D) is arranged in a column along the height direction (Y) of the housing (10); and
two adjacent pairs of first signal terminals (D) are aligned in the transverse direction (X) of the housing (10) and separated by a predetermined distance in the transverse direction (X) of the housing (10).

6. The hybrid connector according to claim 1, **characterized in that**
the second signal terminal (S) comprises a plurality of second signal terminals (S) which are aligned along the transverse direction (X) or height direction (Y) of the housing (10).

7. The hybrid connector according to claim 1, **characterized in that**
the second signal terminal (S) comprises a plurality of second signal terminals (S) which are arranged in multiple rows and columns along the transverse direction (X) and height direction (Y) of the housing (10).

8. The hybrid connector according to claim 1, **characterized in that**
the second signal terminals (S) comprise a plurality of pairs of second signal terminals (S), and each pair of second signal terminals (S) is arranged in a row along the transverse direction (X) of the housing (10) or in a column along the height direction (Y) of the housing (10); and
two adjacent pairs of second signal terminals (S) are aligned and separated in the transverse direction (X) or the height direction (Y) of the housing (10).

9. The hybrid connector according to any one of claims 1-8, **characterized in that**
the power supply terminal (P) is different from the first signal terminal (D) and the second signal terminal (S); and
the cross-sectional area of the power supply terminal (P) is greater than that of the first signal terminal (D) and the second signal terminal (S).

10. The hybrid connector according to claim 9, **characterized in that**
the first signal terminal (D) and the second signal terminal (S) are identical, so that the first signal terminal (D) and the second signal terminal (S) is capable of being used interchangeably.

11. The hybrid connector according to any one of claims 1-8, **characterized in that**
the first signal terminal (D) comprises at least one pair of Ethernet signal terminals (D1, D2) for transmitting Ethernet signals;
the second signal terminal (S) comprises at least one pair of LAN signal terminals (S1, S2, S3, S4) for transmitting LAN signals.

12. The hybrid connector according to claims 1-8, **characterized by** further comprising:
an electromagnetic shield (20) arranged in the housing (10),
wherein the electromagnetic shield (20) at least comprises a first side wall (21) located between the power terminal (P) and the first signal terminal (D) to isolate the first signal terminal (D) from the power terminal (P),
wherein the first side wall (21) and the power terminal (P) are adjacent to each other on the transverse direction (X) of the housing (10),
wherein the electromagnetic shield (20) has a connection pin (20a) extending longitudinally to the outside of the housing (10) for electrical connection to a circuit board.

13. The hybrid connector according to claim 12, **characterized in that**
the electromagnetic shield (20) also comprises of:
a second side wall (22) opposite to the first side wall (21); and
a third side wall (23) which is connected between the first side wall (21) and the second side wall (22),
wherein the first side wall (21), the second side wall (22) and the third side wall (23) of the electromagnetic shield (20) form an accommodation space opened at one side, and the first signal terminal (D) is accommodated in the accommodation space.

14. The hybrid connector according to claim 12, **characterized in that**
the electromagnetic shield (20) comprises a closed peripheral wall, and the first signal terminal (D) is contained in the electromagnetic shield (20), so that the first signal terminal (D) is isolated from the power terminal (P).

15. The hybrid connector according to any one of claims 1-8, **characterized in that**
the housing (10) comprises of:
an installation part (12) for fixedly installing the connector; and
a body part (11) fixedly connected to one side of the installation part (12),
wherein the outer surface of the peripheral wall of body part (11) extends continuously along a circumferential direction to form an integral mating surface for mating with a mating housing of a mating connector,
wherein a terminal cavity (110) is formed in the body part (11) to accommodate the terminals (P, D, S),
wherein the terminal (P, D, S) comprises a mating end extending into the terminal cavity (110) for mating with a mating terminal of the mating connector and a connection end extending from the other side of the installation part (12) for connecting to the circuit board.
